# EUROPÄISCHE PATENTSCHRIFT

(11) **EP 3 865 979 B1**
(45) Veröffentlichungstag und Bekanntmachung des Hinweises auf die Patenterteilung: **20.05.2026**
(21) Anmeldenummer: 20157297.1
(22) Anmeldetag: 14.02.2020
(51) Int. Cl.: G06F 3/00, G05B 19/401, G01B 21/04, G01B 5/008

(54) **VERFAHREN, COMPUTERPROGRAMM UND VORRICHTUNG ZUR UNTERSTÜTZUNG EINER SOFTWAREBASIERTEN PLANUNG EINER DIMENSIONELLEN MESSUNG**
METHOD, COMPUTER PROGRAMM AND DEVICE FOR SUPPORTING SOFTWARE-BASED PLANNING OF A DIMENSIONAL MEASUREMENT
PROCÉDÉ, PROGRAMME D'ORDINATEUR ET DISPOSITIF D'AIDE À UNE PLANIFICATION BASÉE SUR UN LOGICIEL D'UNE MESURE DIMENSIONNELLE

(43) Veröffentlichungstag der Anmeldung: 18.08.2021
(73) Patentinhaber: Carl Zeiss Industrielle Messtechnik GmbH, 73447 Oberkochen (DE)
(72) Erfinder: Ritter, Markus, 89520 Heidenheim (DE); Hersacher, Steffen, 73463 Westhausen (DE); Neumaier, Kilian, 89520 Heidenheim (DE)
(74) Vertreter: Witte, Weller & Partner Patentanwälte mbB

(56) Entgegenhaltungen:
- JP-A- 2006 065 582
- US-A1- 2017 090 742
- US-A1- 2018 010 910

## Beschreibung

Die vorliegende Erfindung betrifft ein Verfahren und eine Vorrichtung zur Unterstützung einer softwarebasierten Planung einer dimensionellen Messung eines Messobjektes. Ferner betrifft die vorliegende Erfindung ein Computerprogrammprodukt, mit Hilfe dessen das erfindungsgemäße Verfahren auf einem Computer ausführbar ist.

Das erfindungsgemäße Verfahren und die erfindungsgemäße Vorrichtung sollen den Anwender eines dimensionellen Messgerätes dabei unterstützen, eine an einem Messobjekt durchgeführte Messung im Vorfeld zu planen. Eine solche Planung erfolgt in der Praxis meist softwarebasiert.

Dimensionelle Messgeräte, für die eine solche softwarebasierte Planung des Messablaufes häufig eingesetzt wird, sind beispielsweise Koordinatenmessgeräte oder Mikroskope. Rauheitsmessgeräte oder andere Messgeräte zur Messung von Abständen und/oder Oberflächeneigenschaften eines Messobjekts werden ebenso als dimensionelle Messgeräte im vorliegenden Sinne verstanden.

Koordinatenmessgeräte mit taktilen und/oder optischen Messsensoren werden in der dimensionellen Messtechnik verwendet, um die Form einer Werkstückoberfläche beispielsweise durch Abtastung zu bestimmen. Da die dimensionelle Messtechnik im Regelfall in Industriezweigen Anwendung findet, in denen sehr hohe Genauigkeiten, beispielsweise für nachfolgende Bearbeitungsschritte oder zur Qualitätssicherung erforderlich sind, ist eine fehlerfreie Messdurchführung von immenser Wichtigkeit.

Mikroskope (z.B. Rasterelektronenmikroskope (REM) oder Rasterkraftmikroskope (RKM)) werden dazu verwendet, beispielsweise die Oberfläche eines Werkstücks im Zuge der Qualitätskontrolle unter einer starken Vergrößerung anzusehen oder bildlich darzustellen. Die betrachteten Oberflächen weisen dabei Strukturen auf, deren Größenordnung unterhalb des Auflösungsvermögens eines menschlichen Auges, teilweise sogar auf atomarer Ebene, liegt. Mikroskopische Messgeräte werden bevorzugt in den Bereichen der Biologie, Medizin und den Materialwissenschaften eingesetzt.

Aufgrund der hohen Genauigkeitsanforderungen an die zuvor genannten dimensionellen Messgeräte ist es wünschenswert, einen möglichst automatisierten, gleichbleibenden Messablauf zu gewährleisten, so dass beispielsweise eine Vielzahl von Messobjekten möglichst schnell und reproduzierbar gemessen werden kann. Bei einem solchen Messablauf wird ein Messkopf des Messgerätes vorzugsweise entlang eines vordefinierten Messpfades bewegt, der vorab durch eine Software-Applikation in Abhängigkeit des zu vermessenden Objektes geplant wurde. Dieser Messpfad wird zusammen mit diversen Mess- und Maschinenparametern in einem Plan abgespeichert, der typischerweise als Messplan oder Prüfplan bezeichnet wird. Die Erstellung eines solch automatisierten Messablaufs und damit die Erstellung des Messplans erfordert Kenntnisse über die Funktionsweise von Messgeräten und Erfahrungen, wie verschiedene Messobjekte am besten zu vermessen sind.

Beispielsweise bietet die Carl Zeiss Industrielle Messtechnik GmbH unter der Bezeichnung CALYPSO eine Software zur Erstellung solcher Messabläufe und zur Verarbeitung der erhaltenen Messergebnisse an. Die Grundlagen von CALYPSO sind beispielsweise in einer Broschüre mit dem Titel "Einfach Messung und was Sie dazu wissen sollten - Eine Fibel der Messtechnik" (Bestellnummer bei Carl Zeiss: 61212-2400101) oder in einer Werbebroschüre der Carl Zeiss Industriellen Messtechnik GmbH mit dem Titel "CALYPSO.einfach programmieren" (Publikationsnr. 60-11-068) beschrieben.

Die Erstellung des Messablaufs mit der Software CALYPSO erfolgt anhand von sogenannten Prüfmerkmalen. Ein Prüfmerkmal repräsentiert eine dimensionelle Eigenschaft eines oder mehrerer geometrischer Elemente (sogenannte Messelemente) an einem Messobjekt.

Beispielhafte Messelemente sind eine Bohrung im Messobjekt, ein Zylinderabschnitt am Messobjekt, eine Kante des Messobjektes, eine Außen- oder Innenfläche des Messobjektes oder ein charakteristischer Punkt auf der Oberfläche des Messobjektes, etc.

Beispielhafte Prüfmerkmale sind der Durchmesser einer Bohrung, die Rundheit eines Zylinderabschnitts, ein räumlicher Abstand zwischen zwei geometrischen Elementen (Punkte, Kanten bzw. Linien oder Flächen).

Um ein Prüfmerkmal eines Messelementes zu quantifizieren, müssen in der Regel mehrere Messpunkte an dem Messelement des Messobjektes erfasst und mit dem Messkopf angefahren werden.

Zum Erstellen des Messablaufes legt der Anwender zunächst die zu messenden Messelemente am Messobjekt fest. Dabei legt der Anwender in der Software beispielsweise anhand eines CAD-Modells des Messobjektes fest, welche geometrischen Elemente (Messelemente) des Messobjektes gemessen werden sollen. Der Anwender wählt beispielsweise die einzelnen zu messenden Messelemente mithilfe eines Cursors aus und selektiert diese beispielsweise durch Klick oder Doppelklick mit der Maus. Zusätzlich zu den zu messenden Messelementen muss der Anwender noch die Prüfmerkmale der einzelnen Messelemente festlegen, er muss also definieren, welche Eigenschaften dieser ausgewählten geometrischen Elemente gemessen werden sollen. Ebenso muss der Anwender die Messreihenfolge sowie diverse weitere Messparameter, beispielsweise die Parameter für die spätere Maschinenbewegung, festlegen. Diese Parametereingabe muss durch einen erfahrenen Anwender geschehen, um den Messablauf beispielsweise an bestimmte Messbedingungen (z.B. eine Verfahrgeschwindigkeit oder Toleranz) anzupassen. Die Parametereingabe und -anpassung erfordert einen hohen zeitlichen Aufwand, da für jedes Messelement eine Vielzahl von Parametern manuell einzugeben ist. Zudem erfordert die manuelle Parametereingabe ein hohes Maß an Fachwissen, was zu hohen Kosten für die Erstellung von Messabläufen führt.

Um diese softwarebasierte Planung des Messablaufes für den Anwender zu vereinfachen, unterstützt gängige Software-Anwendungen den Anwender meist wie folgt bei der Festlegung der zu messenden Prüfmerkmale: Sobald die Software einen Eingabebefehl zur Selektion eines oder mehrerer Messelemente erhält (beispielsweise indem der Anwender eines oder mehrere Messelemente mit seiner Maus selektiert), ermittelt die Software eine Auswahl grundsätzlich möglicher, messbarer Prüfmerkmale, die zu dem selektierten Messelement passen. Diese Ermittlung erfolgt typischerweise in Abhängigkeit von der Art des selektierten Messelementes bzw. der selektierten Messelemente und ist in der Software für jede Art von Messelement typischerweise vordefiniert. Beispielsweise sind in einer Datenbank jegliche mögliche Messgrößen, die bezüglich einer Bohrung messbar sind und von Interesse sein könnten, als messbare Prüfmerkmale des Messelemente "Bohrung" hinterlegt. Sobald der Anwender also eine Bohrung an dem CAD-Modell des Messobjektes als zu messendes Messelement selektiert, ermittelt die Software diese Auswahl messbarer Prüfmerkmale durch Aufrufen der entsprechenden Speichereinträge und visualisiert alle Prüfmerkmale, die zu der selektierten Bohrung grundsätzlich messbar sind, auf einem Display. Typischerweise geschieht dies durch eine Visualisierung von grafischen Darstellungen der einzelnen Prüfmerkmale auf dem Display. Jedes grundsätzlich mögliche Prüfmerkmal des selektierten Messelementes wird auf dem Display typischerweise durch eine entsprechende grafische Darstellung angezeigt. Eine solche grafische Darstellung kann beispielsweise ein Bemaßungselement sein, das eine Bemaßungslinie, ein Bemaßungspfeil, ein Bemaßungssymbol und/oder ein Bemaßungstext umfasst. Der Anwender kann dann, beispielsweise durch Klicken auf eine grafische Darstellung eines Prüfmerkmals, das gewünschte Prüfmerkmal selektieren und in dem Messplan als für das jeweilige Messelement zu prüfendes Prüfmerkmal festlegen und abspeichern (sogenannte Click&Pick-Auswahl).

Problematisch ist hierbei Folgendes: Typischerweise existiert eine Vielzahl grundsätzlich möglicher Prüfmerkmale, die an bzw. für ein Messelement grundsätzlich messbar sind. Dies führt bei der oben erwähnten Vorgehensweise in den bisher bekannten Softwareapplikationen dazu, dass sehr sehr viele verschiedene grafische Darstellungen möglicher Prüfmerkmale auf dem Display gleichzeitig angezeigt werden, wenn der Anwender ein Messelement selektiert. Wählt der Anwender ein Prüfmerkmal aus, so werden ihm also gleichzeitig sehr viele Möglichkeiten für entsprechende Prüfmerkmale vorgeschlagen. Typischerweise erhöht sich die Anzahl der von der Software vorgeschlagenen Prüfmerkmale und damit die Anzahl der auf dem Display angezeigten grafischen Darstellung der vorgeschlagenen Prüfmerkmale bei einer gleichzeitigen Selektion mehrerer Messelemente.

In solchen Situationen kann ein Anwender die von ihm tatsächlich gewünschten Prüfmerkmale nur sehr schwierig auswählen. Die ihm angezeigten Möglichkeiten sind aufgrund der Vielzahl von grafischen Darstellungen, die auf dem Display angezeigt werden, unübersichtlich. Dies erschwert den Prozess der Planung des Messablaufes und kostet letztendlich den Anwender der Software mehr Zeit.

Zwar gibt es bei der eingangs erwähnten CALYPSO-Software die Möglichkeit, dass der Anwender der Software zugunsten der Übersichtlichkeit eine statische Vorauswahl der ihm angezeigten, möglichen Prüfmerkmale trifft. Beispielsweise kann der Anwender durch Vorauswahl vorab festlegen, dass bei Selektion eines Messelementes einer bestimmten Art ihm nur eine bestimmte Anzahl, spezifisch von ihm definierter Prüfmerkmale vorgeschlagen bzw. auf dem Display angezeigt wird. Auch diese Maßnahme führt jedoch nur in begrenzter Weise zu einer Vereinfachung des Handlings für den Anwender der Software. Je nach Anwendungsfall und Art des Messobjektes kann es durchaus notwendig sein, die Vorauswahl der auf dem Display angezeigten Prüfmerkmalsvorschläge zu verändern. Um diese Vorauswahl zu beeinflussen, z.B. um bei Selektion eines gewissen Messelementes einen anderen Prüfmerkmalstyp softwareseitig vorzuschlagen, ist ein manueller Eingriff des Anwenders notwendig.

Aus der US 2018 010 910 A1 ist ein computergestütztes Verfahren zur Bestimmung von dimensionellen Eigenschaften eines Messobjekts unter Verwendung einer Koordinatenmessmaschine bekannt.

Es ist daher eine Aufgabe der vorliegenden Erfindung, ein Verfahren und eine Vorrichtung bereitzustellen, die die oben genannten Nachteile überwinden. Dabei ist es insbesondere eine Aufgabe der vorliegenden Erfindung, ein Verfahren und eine Vorrichtung zur Unterstützung der softwarebasierten Planung einer dimensionellen Messung eines Messobjektes derart zu verbessern, dass für den Anwender des Verfahrens und der Vorrichtung die Selektion der Prüfmerkmale, welche in den Messplan übernommen werden sollen, vereinfacht wird.

Diese Aufgabe wird erfindungsgemäß gelöst durch ein Verfahren, das die folgenden Schritte aufweist:
- Empfangen eines Eingabebefehls zur Selektion zumindest eines bei der Messung zu messenden Messelementes des Messobjektes;
- Ermitteln einer Auswahl messbarer Prüfmerkmale des zumindest einen selektierten Messelements, wobei jedes der Prüfmerkmale eine dimensionell messbare Messgröße des zumindest einen selektierten Messelementes aufweist;
- Ermitteln einer reduzierten Teilmenge der Auswahl messbarer Prüfmerkmale in Abhängigkeit einer von einem Anwender auf einem Display aktuell gewählten Ansicht auf das Messobjekt, wobei die reduzierte Teilmenge der Prüfmerkmale erneut ermittelt wird, sobald die Ansicht auf das Messobjekt auf dem Display geändert wird;
- Visualisieren der in der reduzierten Teilmenge enthaltenen Prüfmerkmale durch eine grafische Darstellung jedes der in der reduzierten Teilmenge enthaltenen Prüfmerkmale auf dem Display;
- Empfangen eines zweiten Eingabebefehls zur Selektion eines auf dem Display (46) visualisierten Prüfmerkmals; und
- Speichern des selektierten Prüfmerkmals in einem Messplan, in dem die bei der dimensionellen Messung des Messobjektes (14) zu messenden Prüfmerkmale gespeichert werden.

Gemäß einem weiteren Aspekt der vorliegenden Erfindung wird die oben genannte Aufgabe durch eine Vorrichtung gelöst, die ein Display und eine Auswerte- und Steuereinheit aufweist, wobei die Auswerte- und Steuereinheit über eine Datenverbindung mit dem Display verbunden ist und dazu eingerichtet ist:
- einen Eingabebefehl zur Selektion zumindest eines bei der Messung zu messenden Messelementes des Messobjektes zu empfangen;
- eine Auswahl messbarer Prüfmerkmale des zumindest einen selektierten Messelements zu ermitteln, wobei jedes der Prüfmerkmale eine dimensionell messbare Messgröße des zumindest einen selektierten Messelementes aufweist;
- eine reduzierte Teilmenge der Auswahl messbarer Prüfmerkmale in Abhängigkeit einer von einem Anwender auf einem Display aktuell gewählten Ansicht auf das Mesobjekt zu ermitteln und die reduzierte Teilmenge der Prüfmerkmale erneut zu ermitteln, sobald die Ansicht auf das Messobjekt auf dem Display geändert wird;
- die in der reduzierten Teilmenge enthaltenen Prüfmerkmale durch eine grafische Darstellung jedes der in der reduzierten Teilmenge enthaltenen Prüfmerkmale auf dem Display zu visualisieren;
- einen zweiten Eingabebefehl zur Selektion eines auf dem Display visualisierten Prüfmerkmals zu empfangen; und
- das selektierte Prüfmerkmal in einem Messplan zu speichern, in dem die bei der dimensionellen Messung des Messobjektes zu messenden Prüfmerkmale gespeichert werden.

Gemäß einem weiteren Aspekt wird die vorliegende Aufgabe erfindungsgemäß durch ein Computerprogrammprodukt gelöst, das einen Programmcode aufweist, der dazu eingerichtet ist, das oben genannte Verfahren auszuführen, wenn der Programmcode auf einem Computer ausgeführt wird.

Erfindungsgemäß werden dem Nutzer nach Selektion zumindest eines Messelements nicht jegliche Prüfmerkmale vorgeschlagen, die für das zumindest eine selektierte Messelement grundsätzlich messbar wären (Auswahl messbarer Prüfmerkmale). Stattdessen wird dem Nutzer auf dem Display nur eine reduzierte Teilmenge dieser Auswahl grundsätzlich messbarer Prüfmerkmale grafisch angezeigt, aus der er dann eines oder mehrere Prüfmerkmale selektieren kann, das/die in den Messplan aufgenommen werden soll/sollen. Die Ermittlung dieser reduzierten Teilmenge an Prüfmerkmalen erfolgt anhand der vom Nutzer auf dem Display aktuell gewählten Ansicht. Somit werden also beispielsweise nur die grafischen Darstellungen der grundsätzlich möglichen Prüfmerkmale eines selektierten Messelements auf dem Display visualisiert, die in der auf dem Display aktuell gewählten Ansicht gut sichtbar sind. Prüfmerkmale, deren grafische Darstellung in der auf dem Display aktuell gewählten Ansicht weniger gut sichtbar wäre, weil sie beispielsweise durch die grafischen Darstellungen anderer Prüfmerkmale verdeckt wären, in der aktuell gewählten Ansicht zu klein wäre oder in der aktuell gewählten Ansicht nur teilweise oder gar nicht sichtbar wäre, werden der reduzierten Teilmenge nicht zugeordnet und somit auf dem Display auch nicht visualisiert.

Dies sorgt für eine wesentlich bessere Übersichtlichkeit für den Anwender, da für ihn nur die Prüfmerkmale auf dem Display grafisch visualisiert werden, die in der aktuell gewählten Ansicht auch gut darstellbar sind. Dem Anwender werden also auf wesentlich intelligentere Art und Weise als bisher Vorschläge für Prüfmerkmale gemacht, die er dann beispielsweise mittels Klick auf dessen grafischer Darstellung auf dem Display selektieren und in den Messplan übernehmen kann. Hierdurch wird das Handling für den Anwender deutlich vereinfacht, so dass dieser einen Messplan zur dimensionellen Messung eines Messobjektes wesentlich einfacher und schneller erstellen kann.

Der vorliegenden Erfindung liegt unter anderem die Idee zugrunde, dass der Anwender durch die von ihm auf dem Display gewählte Ansicht bereits intuitiv selbst eine Auswahl an Prüfmerkmalen vornimmt, die für ihn interessant sein könnte. Dies folgt aus der Annahme, dass der Anwender bei der Selektion eines Messelementes auf dem Display immer die Ansicht auf das Messobjekt wählen wird, in der das von ihm aktuell gesuchte Prüfmerkmal bzw. dessen grafische Darstellung auf dem Display auch möglichst gut ersichtlich ist.

Ist der Anwender beispielsweise daran interessiert, den Durchmesser einer Bohrung als Prüfmerkmal in den Messplan aufzunehmen, so wird er, bevor er die Bohrung als ein bei der Messung zu messendes Messelement per Eingabebefehl selektiert, auf dem Display eine Ansicht wählen, in der diese Bohrung und insbesondere deren Durchmesser möglichst gut sichtbar ist. In einem solchen Fall wird der Anwender beispielsweise auf dem Display nicht eine Ansicht wählen, in der der Durchmesser der Bohrung nur teilweise abbildbar oder aus anderen Gründen nur sehr schlecht sichtbar wäre.

Erfindungsgemäß weist das Verfahren die folgenden Schritte auf:
- Empfangen eines zweiten Eingabebefehls zur Selektion eines auf dem Display visualisierten Prüfmerkmals; und
- Speichern des selektierten Prüfmerkmals in einem Messplan, in dem die bei der dimensionellen Messung des Messobjektes zu messenden Prüfmerkmale gespeichert werden.

Der Anwender kann also vorzugsweise mittels Click&Pick-Auswahl aus der ihm auf dem Display angezeigten, reduzierten Teilmenge von Prüfmerkmalen bzw. deren grafischen Darstellungen eines oder mehrere selektieren, die dann in dem Messplan gespeichert werden. Der Anwender benötigt somit nur sehr wenige Schritte, um ein Prüfmerkmal für den Messplan zu selektieren. Er muss lediglich eine entsprechende Ansicht auf dem Display wählen, in dem der Teil des Messobjektes, der für ihn aktuell von Interesse ist, gut sichtbar ist; dann muss er per Eingabebefehl zumindest ein zu messendes Messelement des Messobjektes selektieren; und letztendlich per zweitem Eingabebefehl ein auf dem Display visualisiertes Prüfmerkmal selektieren, das dann in den Messplan übernommen wird.

Erfindungsgemäß wird die reduzierte Teilmenge der Prüfmerkmale, deren grafische Darstellungen auf dem Display visualisiert werden, erneut ermittelt, sobald die Ansicht auf dem Display geändert wird.

Die Ermittlung der reduzierten Teilmenge der auf dem Display zu visualisierenden Prüfmerkmalsvorschläge wird also dynamisch in Abhängigkeit der auf dem Display von dem Anwender gewählten Ansicht ermittelt. Sobald der Anwender diese Ansicht auf dem Display ändert, indem er beispielsweise das Messobjekt virtuell dreht oder aus der aktuellen Ansicht hineinzoomt oder herauszoomt, werden automatisch auch die Prüfmerkmalsvorschläge, die der Anwender durch die auf dem Display angezeigten grafischen Darstellungen der Prüfmerkmale erhält, entsprechend angepasst. Auf diese Weise erhält der Anwender dauerhaft eine sehr übersichtliche Darstellung, in der nur wenige Prüfmerkmale durch deren entsprechende Darstellung vorgeschlagen werden, die aufgrund der aktuell gewählten Ansicht sinnvoll sein könnten.

Gemäß einer Ausgestaltung wird bei der Ermittlung der reduzierten Teilmenge von Prüfmerkmalen ermittelt, welche Positionen, räumliche Lagen und/oder Größen die jeweiligen grafischen Darstellungen der in der Auswahl enthaltenen Prüfmerkmale in der auf dem Display aktuell gewählten Ansicht hätten, wenn die grafischen Darstellungen auf dem Display angezeigt werden würden, wobei ein in der Auswahl enthaltenes Prüfmerkmal der reduzierten Teilmenge nur dann zugeordnet wird, wenn die grafische Darstellung dieses Prüfmerkmals zumindest ein vordefiniertes Kriterium bezüglich der Position, der räumlichen Lage und/oder der Größe in der auf dem Display aktuell gewählten Ansicht erfüllt.

Bei einer Selektion zumindest eines Messelementes wird also zunächst wie üblich eine Auswahl grundsätzlich messbarer Prüfmerkmale ermittelt. Diese Auswahl messbarer Prüfmerkmale des zumindest einen selektierten Messelementes wird bevorzugt in Abhängigkeit von der Art des zumindest einen selektierten Messelementes ermittelt. Die Auswahl der grundsätzlich messbaren Prüfmerkmale enthält also nur die Prüfmerkmale, die bezüglich des zumindest einen von dem Anwender selektierten Messelementes generell von Interesse sein könnten. Selektiert der Anwender beispielsweise zwei Punkte an dem Messobjekt, so enthält die zunächst ermittelte Auswahl grundsätzlich messbarer Prüfmerkmale beispielsweise einen Abstand zwischen den beiden Punkten oder den jeweiligen Abstand der beiden Punkte von einem Ursprung eines Koordinatensystems. Die zunächst ermittelte Auswahl grundsätzlich messbarer Prüfmerkmale wird bei einer Selektion zweier Punkte, die als Messelemente vom Anwender selektiert werden, keinen Durchmesser, Radius oder Winkel enthalten, da derartige Prüfmerkmale bei der Selektion zweier Punkt ohnehin keinen Sinn ergeben würden.

Aus dieser (Vor-)Auswahl generell möglicher, messbarer Prüfmerkmale wird dann die reduzierte Teilmenge von Prüfmerkmalen ermittelt, wobei ein in der (Vor-)Auswahl enthaltenes Prüfmerkmal der reduzierten Teilmenge nur dann zugeordnet wird, wenn dessen grafische Darstellung in der auf dem Display aktuell gewählten Ansicht eine gewisse Position, Lage und/oder Größe hat. Andernfalls wird das entsprechende Prüfmerkmal der reduzierten Teilmenge nicht zugeordnet und somit auf dem Display auch nicht visualisiert. Es steht dann dem Anwender gar nicht zur Auswahl und Übernahme in den Messplan zur Verfügung.

Gemäß einer ersten Alternative umfasst das zumindest eine vordefinierte Kriterium, wonach ein in der zunächst ermittelten Auswahl generell messbarer Prüfmerkmale enthaltenes Prüfmerkmal in die reduzierte Teilmenge von Prüfmerkmalen übernommen wird, dass die grafische Darstellung des jeweiligen Prüfmerkmals, insbesondere eine Längsrichtung der grafischen Darstellung des jeweiligen Prüfmerkmals, in der auf dem Display aktuell gewählten Ansicht einen vordefinierten Winkel in Bezug auf einen orthogonal zu einer Bildebene des Displays ausgerichteten normalen Vektor überschreitet.

Ein Prüfmerkmal wird demnach nur dann der reduzierten Teilmenge zugeordnet, wenn dessen grafische Darstellung unter einem vordefinierten Mindestwinkel zur Blickrichtung des Anwenders ausgerichtet ist, wobei die Blickrichtung als orthogonal (Normalenrichtung) zu der aktuell auf dem Display gewählten Bildebene angenommen wird. Prüfmerkmale, deren grafische Darstellung beispielsweise parallel zur aktuellen Blickrichtung angezeigt werden würden oder nur einen sehr geringen Winkel in Bezug auf die Normalenrichtung der Bildebene des Displays hätten, werden der reduzierten Teilmenge nicht zugeordnet und damit auf dem Display nicht angezeigt. Bei Letzteren geht man davon aus, dass deren grafische Darstellungen in der auf dem Display aktuell gewählten Ansicht für den Nutzer ohnehin nur schlecht sichtbar wären. Prüfmerkmale, deren grafische Darstellungen exakt in der Bildebene des Display liegen, also quer bzw. orthogonal zu der Normalenrichtung der Bildebene ausgerichtet sind, werden hingegen der reduzierten Teilmenge zugeordnet und auf dem Display angezeigt, da diese in der aktuell gewählten Ansicht sehr gut sichtbar sind.

Es versteht sich, dass unter dem Begriff "Bildebene" eine zweidimensionale Ebene verstanden wird, die beispielsweise der Oberfläche eines flachen, zweidimensionalen Displays entspricht. Die erwähnte Normalenrichtung verläuft orthogonal zu dieser Bildebene.

Gemäß einer weiteren Alternative umfasst das zumindest eine vordefinierte Kriterium, wonach die Prüfmerkmale der reduzierten Teilmenge zugeordnet werden, dass die grafische Darstellung des jeweiligen Prüfmerkmals in der auf dem Display aktuell gewählten Ansicht vollständig darstellbar ist.

Demnach wird ein Prüfmerkmal nur dann der reduzierten Teilmenge zugeordnet und auf dem Display visualisiert, wenn dessen grafische Darstellung auf dem Display in der aktuell gewählten Ansicht vollständig darstellbar ist. Fällt hingegen nur ein Teil der grafischen Darstellung des Prüfmerkmals in den Bereich der auf dem Display aktuell gewählten Ansicht, so würde das entsprechende Prüfmerkmal auf dem Display nicht dargestellt.

Dies kann beispielsweise dann der Fall sein, wenn der Nutzer auf dem Display eine vergrößerte Ansicht wählt, in der nur ein Detail einer Bohrung, jedoch nicht die gesamte Bohrung sichtbar ist. In einem solchen Fall wird davon ausgegangen, dass der Anwender nicht an dem Durchmesser als Prüfmerkmal der Bohrung interessiert ist, sondern beispielsweise nur an der Rundheit des aktuell sichtbaren Teils der Innenfläche der Bohrung.

Gemäß einer weiteren Alternative umfasst das zumindest eine vordefinierte Kriterium, das die grafische Darstellung des jeweiligen Prüfmerkmals in der auf dem Display aktuell gewählten Ansicht eine vordefinierte Größe überschreitet.

Würde die grafische Darstellung eines möglichen Prüfmerkmals in der aktuell gewählten Ansicht zu klein dargestellt werden, da das entsprechende Detail nur einen sehr kleinen Ausschnitt der aktuell auf dem Display gewählten Ansicht einnimmt, so wird dieses Prüfmerkmal der reduzierten Teilmenge nicht zugeordnet und damit auf dem Display gar nicht erst angezeigt. Auch hier wird wiederum davon ausgegangen, dass der Anwender bei der Selektion eines Messelementes eine Ansicht auf dem Display wählt, in der das von ihm aktuell gesuchte Prüfmerkmal dieses Messelementes groß genug darstellbar ist.

Möchte er beispielsweise den Durchmesser einer Bohrung des Messobjektes als Prüfmerkmal festlegen, so wird der Anwender keine Ansicht auf das Messobjekt wählen, in der die entsprechende Bohrung nur sehr klein dargestellt ist. Klickt er diese Bohrung an, trotz der Tatsache, dass diese auf dem Display sehr klein dargestellt ist, so könnte dies darauf hindeuten, dass er an dem Abstand der Mittelachse der Bohrung von dem Ursprung des Koordinatensystems als Prüfmerkmal interessiert ist, wenn dieser Ursprung des Koordinatensystems etwas weiter weg von der Bohrung platziert ist. Dieser Abstand könnte in diesem Fall nämlich durch einen Pfeil angezeigt werden, der in der auf dem Display aktuell gewählten Ansicht relativ groß darstellbar wäre.

Es versteht sich, dass das zumindest eine vordefinierte Kriterium, das für die Zuordnung der Prüfmerkmale zu der reduzierten Teilmenge verwendet wird, nicht nur eine der oben genannten Alternativen umfassen kann, sondern auch eine beliebige Kombination der oben genannten Alternativen oder alle oben genannten Alternativen als Bedingungen umfassen kann.

Zu den erwähnten grafischen Darstellungen der Prüfmerkmale gehören beispielsweise Bemaßungselemente, wie eine Bemaßungslinie, ein Bemaßungspfeil, ein Bemaßungssymbol und/oder ein Bemaßungstext. Die Prüfmerkmale werden, anders ausgedrückt, vorzugsweise in Form einer Bemaßungslinie, eines Bemaßungspfeils, eines Bemaßungssymbols und/oder eines Bemaßungstextes auf dem Display grafisch dargestellt. Vorzugsweise hat jedes Prüfmerkmal eine vordefinierte Art der grafischen Darstellung. Die Größe der grafischen Darstellung ist hingegen abhängig von der auf dem Display aktuell gewählten Ansicht.

Beispielsweise wird der Abstand zwischen zwei Punkten grundsätzlich durch einen Doppelpfeil zwischen den beiden Punkten grafisch dargestellt. Die Größe dieses Doppelpfeils wie auch die räumliche Lage bzw. Ausrichtung dieses Doppelpfeils variiert naturgemäß jedoch je nach der auf dem Display gewählten Ansicht.

Beispielhafte Prüfmerkmale sind: Ein räumlicher Abstand zwischen zwei Punkten, ein räumlicher Abstand zwischen zwei Geraden/Kanten, ein räumlicher Abstand zwischen zwei Ebenen, ein räumlicher Abstand eines Punktes von einer Geraden oder einer Ebene, ein räumlicher Abstand einer Geraden von einer Ebene, ein räumlicher Abstand einer Ebene, einer Geraden oder eines Punktes von einem Ursprung eines Koordinatensystems, eine Projektion eines räumlichen Abstandes auf eine Koordinatenachse, ein räumlicher Winkel, eine Projektion eines räumlichen Winkels in eine Koordinatenebene, eine Parallelität zweier Geraden oder Ebenen, eine Rechtwinkligkeit zweier Geraden oder Ebenen, eine Formabweichung eines Kreises, eines Kreissegments, einer Gerade, eines Rechtecks, eines Langlochs oder einer Ebene, ein Durchmesser oder ein Radius eines Kreises oder eines Kreissegments, eine Kurvenlänge, eine Kurvenform, eine Rundheit eines Kreises oder eines Kreissegments, eine Geradheit einer Gerade, eine Ebenheit einer Ebene und/oder eine Rauheit einer Fläche.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, in den beigelegten Ansprüchen definiert, zu verlassen.

Zudem versteht es sich, dass sich die vorstehend genannten und die nachstehend noch zu erläuternden Merkmale nicht nur auf das erfindungsgemäße Verfahren, sondern in äquivalenterweise auch auf die erfindungsgemäße Vorrichtung sowie auf das erfindungsgemäße Computerprogrammprodukt beziehen.

Ausführungsbeispiele der Erfindung sind in den Zeichnungen dargestellt und werden in der nachfolgenden Beschreibung näher erläutert. Es zeigen:
- Fig. 1: ein Messgerät mit einem Ausführungsbeispiel der erfindungsgemäßen Vorrichtung;
- Fig. 2: ein Ablaufdiagramm eines Ausführungsbeispiels des erfindungsgemäßen Verfahrens;
- Fig. 3: eine erste schematische Darstellung zur Erläuterung von Prinzipien des erfindungsgemäßen Verfahrens; und
- Fig. 4: eine zweite schematische Darstellung zur Erläuterung von Prinzipien des erfindungsgemäßen Verfahrens.

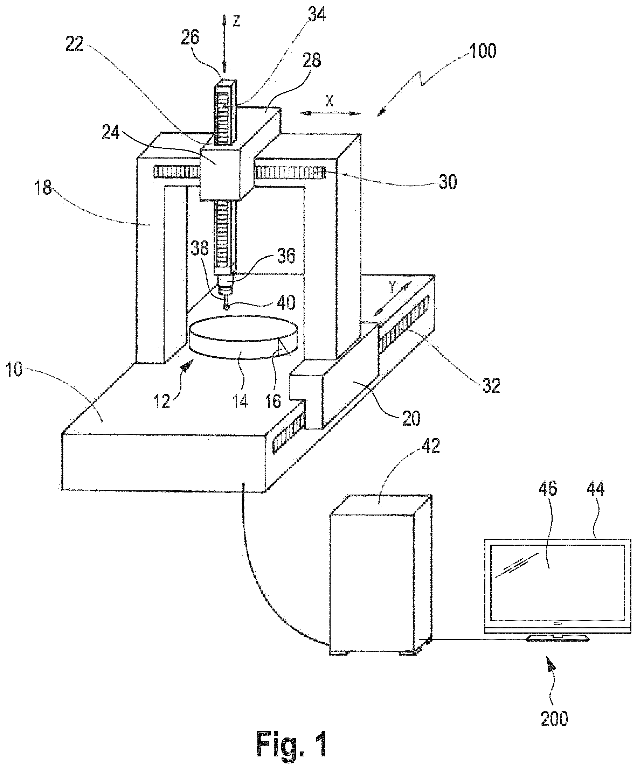

Fig. 1 zeigt ein beispielhaftes Messgerät mit einem Ausführungsbeispiel einer erfindungsgemäßen Vorrichtung, auf der das erfindungsgemäße Verfahren ausführbar ist. Das Messgerät ist in seiner Gesamtheit mit der Bezugsziffer 100 bezeichnet. Die Vorrichtung ist in ihrer Gesamtheit mit der Bezugsziffer 200 gekennzeichnet.

Bei dem Messgerät 100 handelt es sich im vorliegenden Beispiel um ein Koordinatenmessgerät in sogenannter Portalbauweise. In anderen Ausführungsbeispielen kann es sich bei dem Messgerät 100 auch um ein Mikroskop, beispielsweise um ein Rasterelektronenmikroskop oder ein Rasterkraftmikroskop handeln. Ebenso kann es sich bei dem Messgerät 100 um andere Arten von Koordinatenmessgeräten oder um grundsätzlich andere Arten von Messgeräten zur dimensionellen Messung handeln.

Das in Fig. 1 gezeigte Koordinatenmessgerät 100 weist eine Basis 10 auf. Bei der Basis 10 handelt es sich vorzugsweise um eine stabile Platte, welche beispielsweise aus Granit gefertigt ist. Auf der Basis 10 ist eine Werkstückaufnahme 12 angeordnet, die dazu ausgebildet ist, ein Messobjekt 14 zu halten bzw. aufzunehmen. Hierzu sind an der Werkstückaufnahme 12 beispielsweise ein oder mehrere Befestigungselemente 16 (z.B. Zwingen oder (Schraub-)Klemmen) vorgesehen, mittels derer das Messobjekt 14 vorzugsweise lösbar an der Werkstückaufnahme 12 befestigt ist. Bei dem Messobjekt 14 kann es sich um ein beliebiges Messobjekt handeln, das mit dem Koordinatenmessgerät 100 vermessen werden soll.

Auf der Basis 10 ist ein Portal 18 in Längsrichtung verschiebbar angeordnet. Das Portal 18 dient als bewegliche Trägerstruktur. Das Portal 18 weist zwei von der Basis 10 nach oben abragende Säulen auf, die durch einen Querträger miteinander verbunden sind und gesamthaft eine umgekehrte U-Form aufweisen.

Die Bewegungsrichtung des Portals 18 relativ zu der Basis 10 wird üblicherweise als Y-Richtung bezeichnet und erfolgt über einen ersten motorischen Antrieb 20 (z.B. einen Stellmotor). Der erste Antrieb 20 ist in einem zu der Basis 10 weisenden Endbereich einer der abragenden Säulen angeordnet und dazu eingerichtet, das Portal 18 entlang der Y-Richtung zu verfahren. An dem oberen Querträger des Portals 18 ist ein Schlitten 22 angeordnet, der in Querrichtung über einen zweiten motorischen Antrieb 24 verfahrbar ist. Diese Querrichtung wird üblicherweise als X-Richtung bezeichnet. Der zweite Antrieb 24 ist vorliegend in dem Schlitten 22 verbaut. Der Schlitten 22 trägt eine Pinole 26, die in Z-Richtung, also senkrecht zu der Basis 10, über einen dritten motorischen Antrieb 28 verfahrbar ist. Der dritte Antrieb 28 ist in dem Schlitten 22 integriert. Es sei erwähnt, dass die Antriebe 20, 24, 28 nicht an den genannten Positionen angeordnet sein müssen. Beispielsweise kann der dritte Antrieb 28 in der Pinole 26 verbaut sein.

Die Bezugsziffern 30, 32, 34 bezeichnen Messeinrichtungen, anhand derer die X-, Y- und Z-Positionen des Portals 18, des Schlittens 22 und der Pinole 26 bestimmt werden können. Typischerweise handelt es sich bei den Messeinrichtungen 30, 32, 34 um Glasmaßstäbe, welche als Messskalen dienen. Diese Messskalen sind in Verbindung mit entsprechenden Leseköpfen (hier nicht dargestellt) dazu ausgebildet, die jeweils aktuelle Position des Portals 18 relativ zu der Basis 10, die Position des Schlittens 22 relativ zu dem oberen Querbalken des Portals 18 und die Position der Pinole 26 relativ zu dem Schlitten 22 zu bestimmen.

An einem unteren, freien Ende der Pinole 26 ist ein Messkopf 36 angeordnet. Der Messkopf 36 ist dazu eingerichtet, Messpunkte an dem Messobjekt 14 zu erfassen. Der Messkopf 36 ist Teil eines Messsensors, dessen Messsensorik von dem Messkopf 36 separat angeordnet oder in diesen integriert und über ein oder mehrere Kabel oder kabellos mit diesen verbunden sein kann. Der Messkopf 36 weist einen in Z-Richtung in Richtung der Basis abragenden, taktilen Taststift 38 auf. Der Taststift 38 ist dazu eingerichtet, mittels eines Tastkopfes 40 eine Oberfläche des Messobjektes 14 abzutasten. Der Tastkopf 40 ist beispielsweise eine Rubinkugel.

Bei der Abtastung der Oberfläche des Messobjektes 14 erzeugt der Tastkopf 40 in dem Messkopf 36 ein elektrisches Messsignal, auf Basis dessen die dimensionellen Eigenschaften des zu vermessenden Messobjektes 14 ermittelt werden können. Zum Anfahren der Messpunkte an dem Messobjekt 14 wird der Messkopf 36 relativ zu der Werkstückaufnahme 12 bzw. zu dem Messobjekt 14 mittels der Antriebe 20, 24, 28 verfahren. Hierzu erhalten die Antriebe 20, 24, 28 von einer Auswerte- und Steuereinheit 42 Steuerbefehle, auf Basis derer die Antriebe 20, 24, 28 jeweils einzeln oder gesamthaft beispielsweise über eine CNC-Ansteuerung angesteuert werden.

Die Auswerte- und Steuereinheit 42 ist in Fig. 1 beabstandet von dem Koordinatenmessgerät 100 als separate Einheit angeordnet und mit der Basis 10 des Koordinatenmessgerätes über mehrere Kabel verbunden. Eine kabellose Verbindung ist ebenfalls möglich. zudem ist es möglich, dass die Auswerte- und Steuereinheit 42 in dem Koordinatenmessgerät 100 (z.B. in der Basis 10) integriert ist.

Die Auswerte- und Steuereinheit 42 ist ferner auch als Teil der Vorrichtung 200 anzusehen. Die Vorrichtung 200 dient nicht nur der Steuerung des Koordinatenmessgeräts 100, sondern im Vorfeld der Messung auch der Unterstützung einer softwarebasierten Planung der Messung des Messobjektes 14. Bevor eine solche Messung beginnen kann, wird der Messablauf nämlich typischerweise softwarebasiert in einem Messplan festgelegt. Hierbei wird insbesondere festgelegt, welche geometrischen Elemente (Messelemente) des Messobjektes 14 gemessen werden sollen und welche dimensionelle Messgrößen (Prüfmerkmale) dieser Messelemente durch das Koordinatenmessgerät 100 quantitativ erfasst werden sollen. Ferner werden in dem Prüfplan diverse Parameter zur Messstrategie, Messgeschwindigkeit sowie zur Steuerung des Koordinatenmessgerätes 100 und insbesondere des Messkopfes 36 festgelegt.

Die Vorrichtung 200 ist vorliegend als ein Computer 44 ausgestaltet. Dieser Computer 44 weist neben der Auswerte- und Steuereinheit 42, die typischerweise als Recheneinheit des Computers ausgestaltet ist, ein Display 46 auf. Die Auswerte- und Steuereinheit 42 weist vorzugsweise einen Prozessor und eine Speichereinrichtung (z.B. eine Festplatte) auf. In dieser Speichereinrichtung ist ein Programmcode einer Softwareapplikation gespeichert, die mithilfe des Prozessors der Auswerte- und Steuereinheit 42 ausführbar ist.

Eine beispielhafte Softwareapplikation ist die von der Anmelderin vertriebene Software CALYPSO. CALYPSO ist eine Software zur Planung von Messpfaden und zur Auswertung von Messpunkten, die bevorzugt dazu ausgebildet ist, das erfindungsgemäße Verfahren zur Unterstützung der softwarebasierten Planung der dimensionellen Messung des Messobjektes 14 auszuführen. Mittels CALYPSO erstellt ein Anwender beispielsweise einen Messplan, anhand dessen die Vermessung des Messobjektes 14 erfolgen soll.

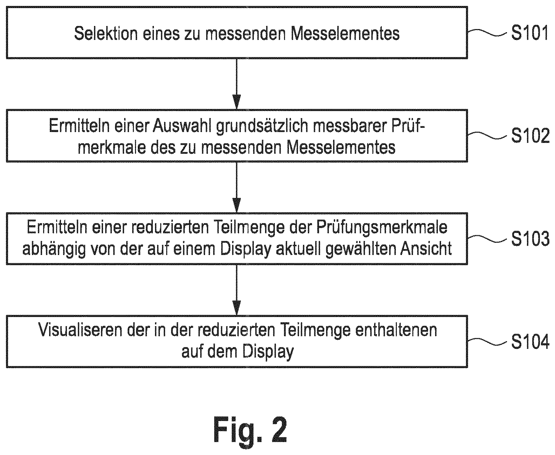

Zur Erzeugung dieses Messplans, welcher häufig auch als Prüfplan bezeichnet wird, definiert der Anwender in einem ersten Schritt zunächst zumindest ein bei der nachfolgenden Messung zu messendes Messelement des Messobjektes 14. Hierfür wird dem Anwender beispielsweise auf dem Display 46 des Computers 44 eine zweidimensionale oder dreidimensionale, virtuelle Ansicht (Szene) eines Messraumes bereitgestellt. In der virtuellen Messraum-Szene wird dem Anwender vorzugsweise das Messobjekt 14 in Form eines zweidimensionalen oder dreidimensionalen Modells (z.B. CAD-Modell) angezeigt, an dem er ein oder mehrere geometrische Elemente als zu messende Messelemente selektieren kann (siehe Schritt S101 in Fig. 2).

Zur Selektion eines vom Anwender gewünschten Messelementes, was beispielsweise eine Kante, ein Punkt, eine Fläche oder eine Bohrung sein kann, klickt der Anwender vorzugsweise mithilfe einer Maus auf das entsprechende Messelement bzw. dessen virtuelle grafische Darstellung auf dem Display 46.

Es versteht sich, dass der Eingabebefehl zur Selektion des zu messenden Messelementes gemäß Schritt S101 auch mithilfe einer anderen Eingabeeinrichtung erfolgen kann und nicht zwangsläufig mithilfe einer Maus erfolgen muss.

Im nächsten Schritt S102 ermittelt die Auswerte- und Steuereinheit 42 dann eine Auswahl messbarer Prüfmerkmale, die für das vom Anwender selektierte Messelement in Frage kommen. Vorzugsweise werden seitens der Auswerte- und Steuereinheit 42 in diesem Schritt lediglich Prüfmerkmale ermittelt, die für das selektierte Messelement einen Sinn ergeben. Wählt der Anwender als Messelement eine Kante aus, so würde ein Durchmesser als Prüfmerkmal dieses Messelementes nur wenig Sinn ergeben und somit in diesem Fall der Auswahl grundsätzlich messbarer Prüfmerkmale des selektierten Messelementes nicht zugeordnet werden.

Die Ermittlung der Auswahl grundsätzlich messbarer Prüfmerkmale in Schritt S102 erfolgt vorzugsweise anhand der Art des vom Anwender selektierten Messelementes. Vorzugsweise ist in der Auswerte- und Steuereinheit 42 hierzu eine Speichereinrichtung vorgesehen, in der jede Art von Messelement eine Liste bzw. Auswahl grundsätzlich möglicher und sinnvoll messbarer Prüfmerkmale zugeordnet ist. Vorzugsweise greift die Auswerte- und Steuereinheit 42 auf diese Zuordnungsliste oder Zuordnung-Tabelle im Schritt S102 zu.

Die in Schritt S102 ermittelte Auswahl grundsätzlich messbarer Prüfmerkmale wird im darauffolgenden Schritt S103 auf eine Auswahl weniger Prüfmerkmale reduziert. Diese in Schritt S103 ermittelte, reduzierte Teilmenge der Prüfmerkmale enthält demnach weniger Prüfmerkmale als die zunächst in Schritt S102 ermittelte Auswahl von Prüfmerkmalen, die bezüglich des selektierten Messelementes grundsätzlich messbar wären.

Die in Schritt 103 erfolgte Reduzierung der Prüfmerkmale auf die erwähnte Teilmenge dient im Wesentlichen dem Zweck, dem Anwender nur eine möglichst geringe Auswahl von Prüfmerkmalen vorzuschlagen, um für diesen die Übersichtlichkeit wahren zu können. Vorzugsweise sollen dem Anwender lediglich die Prüfmerkmale zur Selektion vorgeschlagen werden, an denen er aller Voraussicht nach interessiert ist.

Die Reduzierung auf die genannte Teilmenge erfolgt erfindungsgemäß in Abhängigkeit von der vom Anwender auf dem Display 46 aktuell gewählten Ansicht. Dem Anwender werden die in der reduzierten Teilmenge enthaltenen Prüfmerkmale durch grafische Visualisierung der Prüfmerkmale vorgeschlagen (Schritt S104 in Fig. 2). Hierzu wird jedes Prüfmerkmal, das in der reduzierten Teilmenge enthalten ist, die in Schritt S103 ermittelt wurde, auf dem Display durch eine entsprechende grafische Darstellung des Prüfmerkmals visualisiert.

Durch einen weiteren Eingabebefehl kann der Anwender ein auf dem Display 46 visualisiertes Prüfmerkmal selektieren, um dieses Prüfmerkmal in den Messplan zu übernehmen und darin abzuspeichern. Vorzugsweise erfolgt dieser Eingabebefehl wieder mittels eines per Maus ausgeführten Click&Pick -Befehls.

Die in der Auswerte- und Steuereinheit 42 installierte Softwareapplikation sorgt in den Schritten S103 und S104, wie oben erwähnt, dafür, dass bei der Selektion eines Messelementes dem Anwender auf dem Display 46 nicht alle grundsätzlich möglichen Prüfmerkmale zu dessen Auswahl präsentiert werden. Stattdessen wird nur eine Teilmenge der für das selektierte Messelement grundsätzlich möglichen Prüfmerkmale dem Anwender auf dem Display 46 präsentiert. Die Auswahl der dem Anwender auf dem Display 46 präsentierten Prüfmerkmale, die er dann mittels Click&Pick in den Messplan übernehmen kann, erfolgt in Abhängigkeit der auf dem Display 46 aktuell gewählten Ansicht. Hierzu wird bei der in Schritt 103 erfolgen Ermittlung der reduzierten Teilmenge von Prüfmerkmalen ermittelt, welche Positionen, räumliche Lagen und/oder Größen die jeweiligen grafischen Darstellungen der Prüfmerkmale, welche in Schritt S102 als grundsätzlich mögliche Prüfmerkmale ermittelt wurden, in der auf dem Display aktuell gewählten Ansicht hätten, wenn die grafischen Darstellung auf dem Display 46 angezeigt werden würden. Die Prüfmerkmale, die in der in Schritt S102 ermittelten Auswahl enthalten sind, werden in Schritt 103 nur dann der reduzierten Teilmenge zugeordnet, wenn die grafische Darstellung dieser Prüfmerkmale zumindest ein vordefiniertes Kriterium bezüglich der Position, der räumlichen Lage und/oder der Größe in der auf dem Display 46 aktuell gewählten Ansicht erfüllt. Diese, in Schritt S103 vorgenommene Ermittlung der reduzierten Teilmenge von Prüfmerkmalen, die in Schritt S104 auf dem Display 46 grafisch visualisiert werden, erfolgt vorzugsweise dynamisch. Dementsprechend ändert sich die reduzierte Teilmenge der Prüfmerkmale, sobald die Ansicht auf dem Display 46 vom Anwender verändert wird. Anders ausgedrückt, werden dem Anwender bei einer Selektion ein und derselben Messelemente je nach aktuell gewählter Ansicht auf dem Display 46 unterschiedliche Prüfmerkmale durch deren grafische Visualisierung vorgeschlagen.

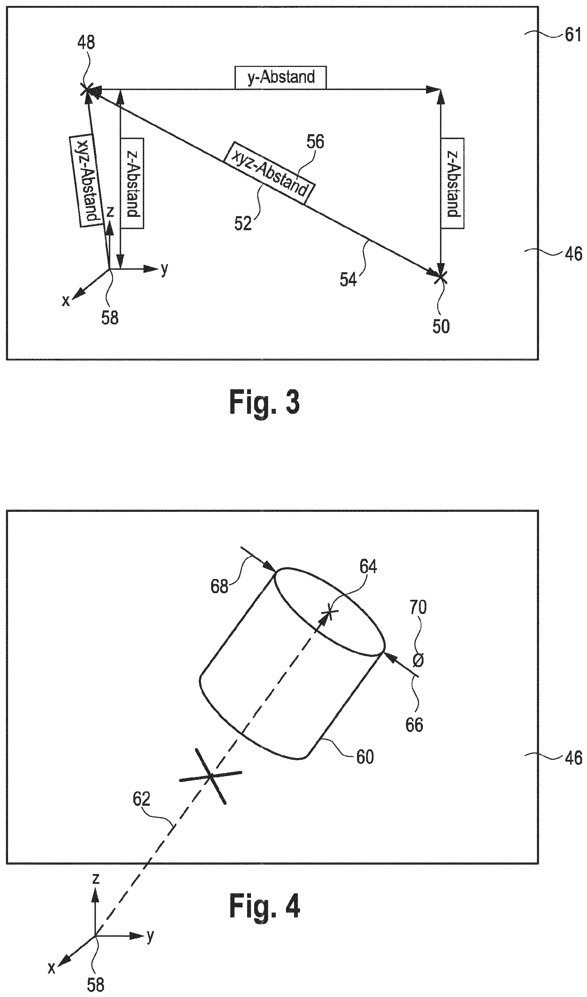

Fig. 3 zeigt ein erstes Beispiel eines solchen grafisch visualisierten Vorschlags von Prüfmerkmalen, aus denen der Anwender eines oder mehrere Prüfmerkmale selektieren kann, um diese in den Messplan für die spätere Messung zu übernehmen. Darin sind zwei Punkte 48, 50 als beispielhafte Messelemente, die vom Anwender in Schritt S101 selektiert wurden, dargestellt. Auf Basis der Selektion dieser beiden Punkte 48, 50 ermittelte die Softwareapplikation in Schritt 102 eine Auswahl grundsätzlich möglicher Prüfmerkmale, die bei einer Selektion zweier Punkte grundsätzlich denkbar wären. Dem Anwender wird in der in Fig. 3 beispielhaft gezeigten Situation schlussendlich jedoch nur eine Teilmenge dieser Prüfmerkmale angezeigt. Hier wird beispielsweise ein erstes Prüfmerkmal anhand einer grafischen Darstellung 52, die einen Bemaßungspfeil 54 und einen Bemaßungstext 56 umfasst, auf dem Display 46 visualisiert. Bei diesem Prüfmerkmal handelt es sich um den räumlichen xyz-Abstand zwischen den beiden Punkten 48, 50. Als weitere auswählbare Prüfmerkmale werden dem Anwender in dem in Fig. 3 schematisch dargestellten Beispiel auf dem Display 46 ein y-Abstand und ein z-Abstand grafisch angezeigt. Bei dem y-Abstand handelt es sich um einen parallel zur y-Achse gemessenen Abstand zwischen den beiden Punkten 48, 50, also um eine Projektion des räumlichen xyz-Abstandes auf die y-Koordinatenachse. Entsprechend handelt es sich bei dem z-Abstand um die Projektion des räumlichen xyz-Abstandes auf die z-Koordinatenachse. Ferner wird dem Anwender noch der räumliche xyz-Abstand von dem Ursprung eines Koordinatensystems 58 zu dem ersten Punkt 48, sowie die z-Projektion dieses Abstandes zur Auswahl angezeigt.

Bei der in Fig. 3 beispielhaft dargestellten Situation, in der der Anwender zunächst die beiden Punkte 48, 50 als Messelemente selektiert (Schritt S101), könnte seitens der Software grundsätzlich auch der x-Abstand, also die Projektion des räumlichen xyz-Abstandes der beiden Punkte 48, 50 auf die x-Achse, angezeigt werden. Eine grafische Darstellung dieses Prüfmerkmals wäre in der in Fig. 3 gewählten Ansicht jedoch kaum sichtbar, da deren grafische Darstellung (Bemaßungspfeil und Bemaßungstext) in der in Fig. 3 gezeigten Situation senkrecht zu der Bildebene 61 (Blattebene) ausgerichtet wäre.

Zum Zwecke der Übersichtlichkeit werden dem Anwender demnach nur die Prüfmerkmale angezeigt, deren grafische Darstellung in der auf dem Display 46 aktuell gewählten Ansicht einen vordefinierten Winkel in Bezug auf eine orthogonal zu der Bildebene 61 des Displays 46 ausgerichtete Normalenrichtung überschreitet. Beispielsweise werden nur Prüfmerkmale angezeigt, deren grafische Darstellung (beispielsweise deren Bemaßungspfeile) mit der orthogonal zu der Bildebene 61 ausgerichteten Normalenrichtung einen Winkel > 30° überschreiten. In dem in Fig. 3 schematisch gezeigten Fall entspricht die Blattebene der Bildebene 61 und die x-Achse des Koordinatensystems 58 der Normalenrichtung dieser Bildebene 61.

Aus selbigen Gründen wird in dem in Fig. 3 schematisch gezeigten Fall beispielsweise auch der x-Abstand zwischen dem Punkt 48 und dem Ursprung des Koordinatensystems 58 dem Anwender nicht als grafische Auswahlmöglichkeit angezeigt. Auch der y-Abstand zwischen dem Punkt 48 und dem Ursprung des Koordinatensystems 58 wird vorliegend nicht angezeigt. Letzteres wird dem Anwender im vorliegenden Fall beispielsweise deshalb nicht angezeigt, weil die grafische Darstellung dieses y-Abstandes zwischen dem Punkt 48 und dem Ursprung des Koordinatensystems 58 in der aktuell auf dem Display 46 gewählten Ansicht eine Mindestgröße nicht überschreiten würde.

Fig. 4 zeigt ein weiteres Beispiel möglicher Prüfmerkmale, die seitens der Software dem Anwender bei Selektion eines Messelementes zur Auswahl angeboten werden. In dem in Fig. 4 gezeigten Fall selektiert der Anwender in Schritt S101 als Messelement 60 beispielsweise einen Zylinder. Daraufhin wird in Schritt S102 die Auswahl grundsätzlich messbarer Prüfmerkmale ermittelt, die bei der Selektion eines Zylinders als Messelement Sinn ergeben. Diese Auswahl grundsätzlich messbarer Prüfmerkmale kann unter anderem den Durchmesser des Zylinders sowie den räumlichen Abstand 62 eines Punktes 64 auf der Zylinderachse von dem Ursprung eines Koordinatensystems 58 umfassen.

In dem in Fig. 4 schematisch dargestellten Beispielfall wird dem Anwender jedoch nur der Durchmesser des Zylinders mithilfe einer grafischen Darstellung 66, die neben einem Bemaßungspfeil 68 auch ein Bemaßungssymbol 70 umfasst, als für den Messplan auswählbares Prüfmerkmal grafisch angezeigt. Den räumlichen Abstand 62 des Punktes 64 von dem Ursprung des Koordinatensystems 58 wird in der Fig. 4 gezeigten Situation hingegen nicht in die reduzierte Teilmenge der Prüfmerkmale übernommen werden, die auf dem Display 46 grafisch dargestellt werden. Dies liegt daran, dass die grafische Darstellung dieses Abstandes in der aktuell auf dem Display 46 gewählten Ansicht nicht vollständig darstellbar ist.

Als Kriterium für die Anzeige eines Prüfmerkmals kann in der Software demnach festgelegt sein, dass ein Prüfmerkmal nur dann auf dem Display 46 grafisch visualisiert wird und dem Anwender zur Auswahl bereitsteht, wenn die grafische Darstellung dieses Prüfmerkmals in der auf dem Display 46 aktuell gewählten Ansicht vollständig darstellbar ist.

Es versteht sich, dass diverse weitere Kriterien in der Software hinterlegt werden können, auf Basis derer die reduzierte Teilmenge der Prüfmerkmale, die letztendlich auf dem Display 46 grafisch visualisiert werden, in Abhängigkeit von der auf diesem Display 46 aktuell gewählten Ansicht zu ermitteln.

## Patentansprüche

1. Verfahren zur Unterstützung einer softwarebasierten Planung einer dimensionellen Messung eines Messobjektes (14), wobei das Verfahren die folgenden Schritte aufweist:
- Empfangen (S101) eines Eingabebefehls zur Selektion zumindest eines bei der Messung zu messenden Messelementes (48, 50, 60) des Messobjektes (14);
- Ermitteln (S102) einer Auswahl messbarer Prüfmerkmale des zumindest einen selektierten Messelements (48, 50, 60), wobei jedes der Prüfmerkmale eine dimensionell messbare Messgröße des zumindest einen selektierten Messelementes (48, 50, 60) aufweist;
- Ermitteln (S103) einer reduzierten Teilmenge der Auswahl messbarer Prüfmerkmale;
- Visualisieren der in der reduzierten Teilmenge enthaltenen Prüfmerkmale durch eine grafische Darstellung (52, 66) jedes der in der reduzierten Teilmenge enthaltenen Prüfmerkmale auf einem Display (46);
- Empfangen eines zweiten Eingabebefehls zur Selektion eines auf dem Display (46) visualisierten Prüfmerkmals; und
- Speichern des selektierten Prüfmerkmals in einem Messplan, in dem die bei der dimensionellen Messung des Messobjektes (14) zu messenden Prüfmerkmale gespeichert werden;
**dadurch gekennzeichnet, dass** die reduzierte Teilmenge der Prüfmerkmale in Abhängigkeit einer von einem Anwender auf dem Display (46) aktuell gewählten Ansicht auf das Messobjekt (14) ermittelt wird, und dass die reduzierte Teilmenge der Prüfmerkmale erneut ermittelt wird, sobald die Ansicht auf das Messobjekt (14) auf dem Display (46) geändert wird.

2. Verfahren nach Anspruch 1, wobei bei der Ermittlung der reduzierten Teilmenge von Prüfmerkmalen ermittelt wird, welche Positionen, räumliche Lagen und/oder Größen die jeweiligen grafischen Darstellungen (52, 62, 66) der in der Auswahl enthaltenen Prüfmerkmale in der auf dem Display (46) aktuell gewählten Ansicht hätten, wenn die grafischen Darstellungen auf dem Display (46) angezeigt werden würden, und ein in der Auswahl enthaltenes Prüfmerkmal der reduzierten Teilmenge nur dann zugeordnet wird, wenn die grafische Darstellung des jeweiligen Prüfmerkmals, insbesondere eine Längsrichtung der grafischen Darstellung (52, 62, 66) des jeweiligen Prüfmerkmals, in der auf dem Display (46) aktuell gewählten Ansicht einen vordefinierten Winkel in Bezug auf eine orthogonal zu einer Bildebene (61) des Displays (46) ausgerichtete Normalenrichtung überschreitet.

3. Verfahren nach Anspruch 1, wobei bei der Ermittlung der reduzierten Teilmenge von Prüfmerkmalen ermittelt wird, welche Positionen, räumliche Lagen und/oder Größen die jeweiligen grafischen Darstellungen (52, 62, 66) der in der Auswahl enthaltenen Prüfmerkmale in der auf dem Display (46) aktuell gewählten Ansicht hätten, wenn die grafischen Darstellungen auf dem Display (46) angezeigt werden würden, und ein in der Auswahl enthaltenes Prüfmerkmal der reduzierten Teilmenge nur dann zugeordnet wird, wenn die grafische Darstellung (52, 62, 66) des jeweiligen Prüfmerkmals in der auf dem Display (46) aktuell gewählten Ansicht vollständig darstellbar ist.

4. Verfahren nach Anspruch 1, wobei bei der Ermittlung der reduzierten Teilmenge von Prüfmerkmalen ermittelt wird, welche Positionen, räumliche Lagen und/oder Größen die jeweiligen grafischen Darstellungen (52, 62, 66) der in der Auswahl enthaltenen Prüfmerkmale in der auf dem Display (46) aktuell gewählten Ansicht hätten, wenn die grafischen Darstellungen auf dem Display (46) angezeigt werden würden, und ein in der Auswahl enthaltenes Prüfmerkmal der reduzierten Teilmenge nur dann zugeordnet wird, wenn die grafische Darstellung (52, 62, 66) des jeweiligen Prüfmerkmals in der auf dem Display (46) aktuell gewählten Ansicht eine vordefinierte Größe überschreitet.

5. Verfahren nach einem der vorstehenden Ansprüche, wobei die grafische Darstellung (52, 62, 66) zumindest eines in der reduzierten Teilmenge enthaltenen Prüfmerkmals ein Bemaßungselement aufweist, das eine Bemaßungslinie (62), einen Bemaßungspfeil (54, 66), ein Bemaßungssymbol (70) und/oder eine Bemaßungstext (56) umfasst.

6. Verfahren nach einem der vorstehenden Ansprüche, wobei die Auswahl messbarer Prüfmerkmale des zumindest einen selektierten Messelements in Abhängigkeit von einer Art des zumindest einen selektierten Messelements ermittelt wird.

7. Verfahren nach einem der vorstehenden Ansprüche, wobei die Auswahl messbarer Prüfmerkmale einen räumlichen Abstand zwischen zwei Punkten; einen räumlichen Abstand zwischen zwei Geraden; einen räumlichen Abstand zwischen zwei Ebenen; einen räumlichen Abstand eines Punktes von einer Geraden; einen räumlichen Abstand eines Punktes von einer Ebene; einen räumlichen Abstand einer Geraden von einer Ebene; einen räumlichen Abstand einer Ebene, einer Geraden oder eines Punktes von einem Ursprung eines Koordinatensystems; eine Projektion eines räumlichen Abstandes auf eine Koordinatenachse; einen räumlichen Winkel; eine Projektion eines räumlichen Winkels in eine Koordinatenebene; eine Parallelität zweier Geraden oder Ebenen; eine Rechtwinkligkeit zweier Geraden oder Ebenen; eine Formabweichung eines Kreises, eines Kreissegments, einer Gerade, eines Rechtecks, eines Langlochs oder einer Ebene; einen Durchmesser oder einen Radius eines Kreises oder eines Kreissegments; eine Kurvenlänge; eine Kurvenform; eine Rundheit eines Kreises oder eines Kreissegments; eine Geradheit einer Gerade; eine Ebenheit einer Ebene und/oder eine Rauheit einer Fläche aufweist.

8. Computerprogrammprodukt mit einem Programmcode, der dazu eingerichtet ist, ein Verfahren nach einem der Ansprüche 1 bis 7 auszuführen, wenn der Programmcode auf einem Computer mit einem Display ausgeführt wird.

9. Vorrichtung (200) zur Unterstützung einer softwarebasierten Planung einer dimensionellen Messung eines Messobjektes (14), wobei die Vorrichtung (200) ein Display (46) und eine Auswerte- und Steuereinheit (42) aufweist, wobei die Auswerte- und Steuereinheit (42) über eine Datenverbindung mit dem Display (46) verbunden ist und dazu eingerichtet ist:
- einen Eingabebefehl zur Selektion zumindest eines bei der Messung zu messenden Messelementes (48, 50, 60) des Messobjektes (14) zu empfangen;
- eine Auswahl messbarer Prüfmerkmale des zumindest einen selektierten Messelements (48, 50, 60) zu ermitteln, wobei jedes der Prüfmerkmale eine dimensionell messbare Messgröße des zumindest einen selektierten Messelementes (48, 50, 60) aufweist;
- eine reduzierte Teilmenge der Auswahl messbarer Prüfmerkmale zu ermitteln;
- die in der reduzierten Teilmenge enthaltenen Prüfmerkmale durch eine grafische Darstellung (52, 66) jedes der in der reduzierten Teilmenge enthaltenen Prüfmerkmale auf dem Display (46) zu visualisieren;
- einen zweiten Eingabebefehl zur Selektion eines auf dem Display (46) visualisierten Prüfmerkmals zu empfangen; und
- das selektierte Prüfmerkmal in einem Messplan zu speichern, in dem die bei der dimensionellen Messung des Messobjektes (14) zu messenden Prüfmerkmale gespeichert werden;
**dadurch gekennzeichnet, dass** die Auswerte- und Steuereinheit (42) dazu eingerichtet ist, die reduzierte Teilmenge der Prüfmerkmale in Abhängigkeit einer von einem Anwender auf dem Display (46) aktuell gewählten Ansicht auf das Messobjekt (14) zu ermitteln und die reduzierte Teilmenge der Prüfmerkmale erneut zu ermitteln, sobald die Ansicht auf das Messobjekt (14) auf dem Display (46) geändert wird.

## Claims

1. Method for assisting software-based planning of a dimensional measurement of a measurement object (14), wherein the method comprises the following steps:
- receiving (S101) an input command for selecting at least one measurement element (48, 50, 60) of the measurement object (14) that is to be measured during the measurement;
- determining (S102) a selection of measurable test features of the at least one selected measurement element (48, 50, 60), wherein each of the test features comprises a dimensionally measurable measurement variable of the at least one selected measurement element (48, 50, 60);
- determining (S103) a reduced subset of the selection of measurable test features;
- visualizing the test features contained in the reduced subset by means of a graphical representation (52, 66) of each of the test features contained in the reduced subset on a display (46);
- receiving a second input command for selecting a test feature visualized on the display (46); and
- storing the selected test feature in a measurement plan, in which the test features to be measured during the dimensional measurement of the measurement object (14) are stored;
**characterized in that** the reduced subset of the test features is determined depending on a view of the measurement object (14) currently chosen by a user on the display (46), and **in that** the reduced subset of the test features is determined again as soon as the view of the measurement object (14) on the display (46) is changed.

2. Method according to Claim 1, wherein determining the reduced subset of test features involves determining what positions, spatial locations and/or sizes the respective graphical representations (52, 62, 66) of the test features contained in the selection would have in the view currently chosen on the display (46) if the graphical representations were to be displayed on the display (46), and a test feature contained in the selection is assigned to the reduced subset only if the graphical representation of the respective test feature, in particular a longitudinal direction of the graphical representation (52, 62, 66) of the respective test feature, in the view currently chosen on the display (46), exceeds a predefined angle in relation to a normal direction oriented orthogonally to an image plane (61) of the display (46).

3. Method according to Claim 1, wherein determining the reduced subset of test features involves determining what positions, spatial locations and/or sizes the respective graphical representations (52, 62, 66) of the test features contained in the selection would have in the view currently chosen on the display (46) if the graphical representations were to be displayed on the display (46), and a test feature contained in the selection is assigned to the reduced subset only if the graphical representation (52, 62, 66) of the respective test feature is completely representable in the view currently chosen on the display (46).

4. Method according to Claim 1, wherein determining the reduced subset of test features involves determining what positions, spatial locations and/or sizes the respective graphical representations (52, 62, 66) of the test features contained in the selection would have in the view currently chosen on the display (46) if the graphical representations were to be displayed on the display (46), and a test feature contained in the selection is assigned to the reduced subset only if the graphical representation (52, 62, 66) of the respective test feature exceeds a predefined size in the view currently chosen on the display (46).

5. Method according to any of the preceding claims, wherein the graphical representation (52, 62, 66) of at least one test feature contained in the reduced subset has a dimensioning element comprising a dimensioning line (62), a dimensioning arrow (54, 66), a dimensioning symbol (70) and/or a dimensioning text (56).

6. Method according to any of the preceding claims, wherein the selection of measurable test features of the at least one selected measurement element is determined depending on a type of the at least one selected measurement element.

7. Method according to any of the preceding claims, wherein the selection of measurable test features comprises a spatial distance between two points; a spatial distance between two straight lines; a spatial distance between two planes; a spatial distance between a point and a straight line; a spatial distance between a point and a plane; a spatial distance between a straight line and a plane; a spatial distance between a plane, a straight line or a point and an origin of a coordinate system; a projection of a spatial distance onto a coordinate axis; a spatial angle; a projection of a spatial angle into a coordinate plane; a parallelism of two straight lines or planes; a perpendicularity of two straight lines or planes; a shape deviation of a circle, of a circle segment, of a straight line, of a rectangle, of an elongated hole or of a plane; a diameter or a radius of a circle or of a circle segment; a curve length; a curve shape; a circularity of a circle or of a circle segment; a straightness of a straight line; a planarity of a plane and/or a roughness of a surface.

8. Computer program product comprising program code configured to carry out a method according to any of Claims 1 to 7 when the program code is executed on a computer with a display.

9. Device (200) for assisting software-based planning of a dimensional measurement of a measurement object (14), wherein the device (200) comprises a display (46) and an evaluation and control unit (42), wherein the evaluation and control unit (42) is connected to the display (46) via a data connection and is configured:
- to receive an input command for selecting at least one measurement element (48, 50, 60) of the measurement object (14) that is to be measured during the measurement;
- to determine a selection of measurable test features of the at least one selected measurement element (48, 50, 60), wherein each of the test features comprises a dimensionally measurable measurement variable of the at least one selected measurement element (48, 50, 60);
- to determine a reduced subset of the selection of measurable test features;
- to visualize the test features contained in the reduced subset by means of a graphical representation (52, 66) of each of the test features contained in the reduced subset on the display (46);
- to receive a second input command for selecting a test feature visualized on the display (46); and
- to store the selected test feature in a measurement plan, in which the test features to be measured during the dimensional measurement of the measurement object (14) are stored;
**characterized in that** the evaluation and control unit (42) is configured to determine the reduced subset of the test features depending on a view of the measurement object (14) currently chosen by a user on the display (46), and to determine the reduced subset of the test features again as soon as the view of the measurement object (14) on the display (46) is changed.

## Revendications

1. Procédé d'aide à la planification logicielle d'une mesure dimensionnelle d'un objet de mesure (14), le procédé comprenant les étapes suivantes :
- réception (S101) d'une instruction d'entrée pour sélectionner au moins un élément de mesure (48, 50, 60) de l'objet de mesure (14) à mesurer lors de la mesure ;
- détermination (S102) d'une sélection de caractéristiques de test mesurables dudit au moins un élément de mesure (48, 50, 60) sélectionné, chacune des caractéristiques de test présentant une grandeur de mesure mesurable dimensionnellement dudit au moins un élément de mesure (48, 50, 60) sélectionné ;
- détermination (S103) d'un sous-ensemble réduit de la sélection des caractéristiques de test mesurables ;
- visualisation des caractéristiques de test contenues dans le sous-ensemble réduit par une représentation graphique (52, 66) de chacune des caractéristiques de test contenues dans le sous-ensemble réduit sur un dispositif d'affichage (46) ;
- réception d'une seconde instruction d'entrée pour sélectionner une caractéristique de test visualisée sur le dispositif d'affichage (46) ; et
- stockage de la caractéristique de test sélectionnée dans un plan de mesure dans lequel sont stockées les caractéristiques de test à mesurer lors de la mesure dimensionnelle de l'objet de mesure (14) ;
**caractérisé en ce que** le sous-ensemble réduit des caractéristiques de test est déterminé en fonction d'une vue de l'objet de mesure (14) actuellement choisie par un utilisateur sur le dispositif d'affichage (46), et **en ce que** le sous-ensemble réduit des caractéristiques de test est déterminé à nouveau dès que la vue de l'objet de mesure (14) sur le dispositif d'affichage (46) est modifiée.

2. Procédé selon la revendication 1, dans lequel, lors de la détermination du sous-ensemble réduit de caractéristiques de test, il est déterminé quelles positions, orientations spatiales et/ou tailles les représentations graphiques (52, 62, 66) respectives des caractéristiques de test contenues dans la sélection auraient dans la vue actuellement choisie sur le dispositif d'affichage (46) si les représentations graphiques étaient affichées sur le dispositif d'affichage (46), et une caractéristique de test contenue dans la sélection n'est associée au sous-ensemble réduit que si la représentation graphique de la caractéristique de test respective, en particulier une direction longitudinale de la représentation graphique (52, 62, 66) de la caractéristique de test respective, dépasse, dans la vue actuellement choisie sur le dispositif d'affichage (46), un angle prédéfini par rapport à une direction normale orientée perpendiculairement à un plan d'image (61) du dispositif d'affichage (46).

3. Procédé selon la revendication 1, dans lequel, lors de la détermination du sous-ensemble réduit de caractéristiques de test, il est déterminé quelles positions, orientations spatiales et/ou tailles les représentations graphiques (52, 62, 66) respectives des caractéristiques de test contenues dans la sélection auraient dans la vue actuellement choisie sur le dispositif d'affichage (46) si les représentations graphiques étaient affichées sur le dispositif d'affichage (46), et une caractéristique de test contenue dans la sélection n'est associée au sous-ensemble réduit que si la représentation graphique (52, 62, 66) de la caractéristique de test respective est entièrement représentable dans la vue actuellement choisie sur le dispositif d'affichage (46).

4. Procédé selon la revendication 1, dans lequel, lors de la détermination du sous-ensemble réduit de caractéristiques de test, il est déterminé quelles positions, orientations spatiales et/ou tailles les représentations graphiques (52, 62, 66) respectives des caractéristiques de test contenues dans la sélection auraient dans la vue actuellement choisie sur le dispositif d'affichage (46) si les représentations graphiques étaient affichées sur le dispositif d'affichage (46), et une caractéristique de test contenue dans la sélection n'est associée au sous-ensemble réduit que si la représentation graphique (52, 62, 66) de la caractéristique de test respective dépasse une taille prédéfinie dans la vue actuellement choisie sur le dispositif d'affichage (46).

5. Procédé selon l'une des revendications précédentes, dans lequel la représentation graphique (52, 62, 66) d'au moins une caractéristique de test contenue dans le sous-ensemble réduit présente un élément de cotation qui comprend une ligne de cote (62), une flèche de cote (54, 66), un symbole de cotation (70) et/ou un texte de cote (56).

6. Procédé selon l'une des revendications précédentes, dans lequel la sélection de caractéristiques de test mesurables dudit au moins un élément de mesure sélectionné est déterminée sur la base d'un type dudit au moins un élément de mesure sélectionné.

7. Procédé selon l'une des revendications précédentes, dans lequel la sélection de caractéristiques de test mesurables comporte une distance spatiale entre deux points ; une distance spatiale entre deux droites ; une distance spatiale entre deux plans ; une distance spatiale entre un point et une droite ; une distance spatiale entre un point et un plan ; une distance spatiale d'une droite à partir d'un plan ; une distance spatiale d'un plan, d'une droite ou d'un point par rapport à une origine d'un système de coordonnées ; une projection d'une distance spatiale sur un axe de coordonnées ; un angle spatial ; une projection d'un angle spatial sur un plan de coordonnées ; un parallélisme de deux droites ou plans ; une perpendicularité de deux droites ou plans ; un défaut de forme d'un cercle, d'un segment de cercle, d'une droite, d'un rectangle, d'un trou oblong ou d'un plan ; un diamètre ou un rayon d'un cercle ou d'un segment de cercle ; une longueur de courbe ; une forme de courbe ; une circularité d'un cercle ou d'un segment de cercle ; une rectitude d'une droite ; une planéité d'un plan et/ou une rugosité d'une surface.

8. Produit de programme informatique comprenant un code de programme qui est conçu pour mettre en œuvre un procédé selon l'une des revendications 1 à 7 lorsque le code de programme est exécuté sur un ordinateur comprenant un dispositif d'affichage.

9. Dispositif (200) d'aide à la planification logicielle d'une mesure dimensionnelle d'un objet de mesure (14), le dispositif (200) comportant un dispositif d'affichage (46) et une unité d'évaluation et de commande (42), l'unité d'évaluation et de commande (42) étant reliée au dispositif d'affichage (46) par l'intermédiaire d'une liaison de données et étant conçue pour :
- recevoir une instruction d'entrée pour sélectionner au moins un élément de mesure (48, 50, 60) de l'objet de mesure (14) à mesurer lors de la mesure;
- déterminer une sélection de caractéristiques de test mesurables dudit au moins un élément de mesure (48, 50, 60) sélectionné, chacune des caractéristiques de test présentant une grandeur de mesure mesurable dimensionnellement dudit au moins un élément de mesure (48, 50, 60) sélectionné ;
- déterminer un sous-ensemble réduit de la sélection de caractéristiques de test mesurables ;
- visualiser les caractéristiques de test contenues dans le sous-ensemble réduit par une représentation graphique (52, 66) de chacune des caractéristiques de test contenues dans le sous-ensemble réduit sur le dispositif d'affichage (46) ;
- recevoir une seconde instruction d'entrée pour sélectionner une caractéristique de test visualisée sur le dispositif d'affichage (46) ; et
- stocker la caractéristique de test sélectionnée dans un plan de mesure dans lequel sont stockées les caractéristiques de test à mesurer lors de la mesure dimensionnelle de l'objet de mesure (14) ;
**caractérisé en ce que** l'unité d'évaluation et de commande (42) est conçue pour déterminer le sous-ensemble réduit des caractéristiques de test en fonction d'une vue de l'objet de mesure (14) actuellement choisie par un utilisateur sur le dispositif d'affichage (46), et pour déterminer à nouveau le sous-ensemble réduit des caractéristiques de test dès que la vue de l'objet de mesure (14) sur le dispositif d'affichage (46) est modifiée.
